# EUROPÄISCHE PATENTSCHRIFT

(11) **EP 1 627 023 B1**
(45) Veröffentlichungstag und Bekanntmachung des Hinweises auf die Patenterteilung: **14.05.2008**
(21) Anmeldenummer: 04739242.8
(22) Anmeldetag: 18.05.2004
(51) Int. Cl.: C09J 133/08, C09J 133/10, C08F 220/06, C08F 2/38, C09J 4/02

(54) **VERFAHREN ZUR HERSTELLUNG VON LÖSUNGSMITTELFREIEN UV-VERNETZBAREN ACRYLATHAFTKLEBERN**
METHOD FOR PRODUCING SOLVENT-FREE UV-CROSSLINKABLE ACRYLATE PRESSURE-SENSITIVE ADHESIVES
PROCEDE DE PRODUCTION D'UNE MATIERE ADHESIVE DE CONTACT A BASE D'ACRYLATE SANS SOLVANT ET RETICULABLE PAR ULTRAVIOLETS

(30) Priorität: 19.05.2003 DE 10322830
(43) Veröffentlichungstag der Anmeldung: 22.02.2006
(73) Patentinhaber: tesa AG, 20253 Hamburg (DE)
(72) Erfinder: ERWIN, Jessica, 22399 Hamburg (DE); MASSOW, Klaus, 22147 Hamburg (DE); ZÖLLNER, Stephan, 21244 Buchholz/Nordheide (DE)
(74) Vertreter: Stubbe, Andreas
(86) Internationale Anmeldenummer: PCT/EP2004/005341
(87) Internationale Veröffentlichungsnummer: WO 2004/101698

(56) Entgegenhaltungen:
- EP-A- 1 300 427
- DE-A- 10 030 217
- DE-A- 10 053 563

## Beschreibung

Die Erfindung betrifft eine Polyacrylathaftklebemasse, Verfahren zur Herstellung einer derartigen Haftklebemasse sowie die Verwendung derartiger Haftklebemassen.

Für industrielle Haftklebeband-Anwendungen werden sehr häufig Polyacrylathaft-klebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Transparenz und ihre Einsatzfähigkeit in einem relativ weiten Temperaturbereich.

Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer vernetzt. Die Härtung verläuft thermisch oder durch UV-Vernetzung oder durch ES-Härtung (ES: Elektronenstrahlung). Der beschriebene Prozess ist relativ kostenaufwendig und ökologisch bedenklich, da das Lösemittel in der Regel nicht recycelt wird und ein hoher Verbrauch an organischen Lösemitteln eine hohe Umweltbelastung bedeutet.

Weiterhin ist es sehr schwierig, Haftklebebänder mit hohem Masseauftrag blasenfrei herzustellen.

Eine Weiterentwicklung aufgrund dieser Nachteile bedeutet der Heißschmelz-Prozess (Hotmelt-Prozess). Hier wird der Haftkleber in der Schmelze auf das Trägermaterial aufgetragen.
Mit dieser neuen Technik sind aber auch Einschränkungen verbunden. Vor der Beschichtung wird der Haftklebemasse, die weiterhin in Lösung hergestellt wird, das Lösemittel in einem Trocknungsextruder entzogen. Der Trocknungsprozess ist mit einer relativ hohen Temperatur und Schereinwirkung verbunden, so dass besonders hochmolekulare Polyacrylathaftklebemassen stark geschädigt werden. Die Acrylathaftklebemasse vergelt oder der niedermolekulare Anteil wird durch Molekulargewichtsabbau stark angereichert. Beide Effekte sind unerwünscht, da sie für die Anwendung nachteilig sind. Die Klebemasse lässt sich entweder nicht mehr beschichten oder die klebtechnischen Eigenschaften der Haftklebemasse verändern sich.

Eine Lösung zur Verminderung dieser Nachteile bieten Polyacrylatklebemassen mit mittlerem niedrigen Molekulargewicht und enger Molekulargewichtsverteilung. Hier wird der Anteil an niedermolekularen und hochmolekularen Molekülen in dem Polymer durch den Polymerisationsprozess stark vermindert. Durch den Wegfall der hochmolekularen Anteile verringert sich die Fließviskosität, und die Masse zeigt eine geringere Tendenz zur Vergelung. Durch die Absenkung des niedermolekularen Anteils wird die Anzahl der Oligomere verringert, die die Scherfestigkeit der Haftklebemasse verringern.

Zur Herstellung von niedermolekularen Haftklebemassen sind verschiedene Polymerisationsmethoden geeignet. Stand der Technik ist der Einsatz von Reglern, wie zum Beispiel von Alkoholen oder Thiolen (Makromoleküle, Hans-Georg Elias, 5. Auflage, 1990, Hüthig & Wepf Verlag Basel). Diese Regler reduzieren das Molekulargewicht, aber verbreitern die Molekulargewichtsverteilung.

Als eine weitere kontrollierte Polymerisationsmethode wird die Atom Transfer Radical Polymerization ATRP eingesetzt. Die unterschiedlichen Möglichkeiten der ATRP sind in US 5,945,491 A und US 5,854,364 A beschrieben. Generell werden Metallkatalysatoren eingesetzt, die als Nebenwirkung die Alterung der Haftklebemassen negativ beeinflussen (Vergelung, Umesterung). Zudem sind die meisten Metallkatalysatoren giftig, verfärben die Klebemasse und lassen sich nur durch aufwendige Fällungen aus dem Polymer entfernen.

In der US 4,581,429 A wird ein kontrolliertes radikalisches Polymerisationsverfahren offenbart. Das Verfahren wendet als Initiator eine Verbindung der Formel R'R"N-O-X an, worin X eine freie radikalische Spezies darstellt, die ungesättigte Monomere polymerisieren kann. Die Reaktionen weisen aber im Allgemeinen geringe Umsatzraten aus. Besonders problematisch ist die Polymerisation von Acrylaten, die nur zu sehr geringen Ausbeuten und Molekulargewichten abläuft.

Die WO 96/24620 A, WO 98/30601 A, WO 98/4408 A beschreiben weitere Polymerisationsverfahren, bei denen durch den Einsatz regelnder Substanzen Polymere mit geringen Polydispersitäten hergestellt werden. Nachteilig bei diesen Verfahren ist der geringe Umsatz und der Einsatz von Lösemitteln.

In den vorstehend erwähnten Patenten beziehungsweise Vorträgen wird versucht, die Steuerung von radikalischen Polymerisationsreaktionen zu verbessern. Dennoch besteht der Bedarf für ein Nitroxid-gesteuertes Polymerisationsverfahren, welches hoch reaktiv ist und mit dem sich hohe Umsätze bei gleichzeitig hohem Molekulargewicht und niedriger Polydispersität realisieren lassen.

Eine weitere Variante ist der RAFT-Prozess (Reversible Addition-Fragmentation Chain Transfer). Der Prozess ist in den WO 98/01478 A und WO 99/31144 A ausführlich beschrieben, eignet sich jedoch in der dort dargestellten Art und Weise nicht zur Herstellung von Haftklebemassen, da die erzielten Umsätze sehr gering sind und das mittlere Molekulargewicht der hergestellten Polymere zu niedrig für Acrylathaftklebemassen ist. Die beschriebenen Polymere lassen sich somit nicht als Acrylathaftklebemassen einsetzen. Eine Weiterentwicklung wird durch den in DE 100 30 217 A beschriebenen Prozess realisiert.

Sowohl das Verfahren nach dem RAFT-Prozess als auch der Einsatz der Nitroxidverbindungen lässt sich aber nicht zur UV-Vernetzung einsetzen, da die offenbarten Verbindungen eine radikalfangende Wirkung besitzen, so dass die Vemetzungseffizienz nach Zugabe des freien UV-Photoinitiators zu gering ist.

Die EP 1 300 427 A beschreibt eine Polyacrylathaftklebemasse mit einem mittleren Molekulargewicht Mw (Gewichtsmittel) von 100.000 bis 600.000 g/mol, einer Polydispersität von nicht mehr als 3,0 und einpolymerisierten Photoinitiatoreinheiten, sowie ein Verfahren zur Herstellung einer UV-vernetzbaren Polyacrylathaftklebemasse mit einer Polydispersität von nicht mehr als 3,0, gekennzeichnet durch einen radikalischen Polymerisationsprozeß zur Herstellung eines Polymers aus einer Monomermischung, bei welchem die zu polymerisierende Monomermischung copolymerisierbare Photoinitiatoren enthält, wobei der Polymerisationsprozeß durch die Anwesenheit zumindest einer chemischen Verbindung enthaltend die Einheit -S-C=X als Polymerisationsregler geregelt wird, wobei X = S, O oder N. Ein Polymerisationsprozess im Planetwalzenextruder wird nicht vorgeschlagen.

Die DE 100 53 563 A beschreibt ein Verfahren zur Herstellung von Haftklebemassen auf Acrylathotmeltbasis, bei welchem eine Monomermischung auf Acrylatbasis in Lösung radikalisch polymerisiert wird, so daß ein Polyacrylat entsteht, wobei die Polymerisation durch Verwendung zumindest eines spaltenden Photoinitiators und durch Bestrahlung mit ultraviolettem Licht initiiert wird, wobei der Photoinitiator vor Beginn der Polymerisation zu der Monomerenmischung und/oder im Verlauf der Polymerisation zu dem Reaktionsgemisch gegeben wird, weiterhin das Polyacrylat vom Lösungsmittel befreit wird, und schließlich das Polyacrylat in der Schmelze weiterverarbeitet wird. Diese Schrift offenbart an keiner Stelle copolymerisierbare Photoinitiatoren. Eine lösemittelfreie Polymerisation wird ebenfalls nicht offenbart.

Von Guse (US 4,144,157 A) wird ein Prozess beschrieben, bei dem die Acrylathaftklebemassen gut UV-vernetzbar und als Hotmelt zu verarbeiten sind, jedoch durch die breite Molekulargewichtsverteilung keine guten klebtechnischen Eigenschaften besitzen. Nachteilig ist außerdem, dass diese Haftklebemassen weiterhin durch Lösungsmittelpolymerisation mit anschließendem Lösungsmittelentzug hergestellt werden.

Kommerziell werden niedermolekulare Acrylathotmelts angeboten, bei denen Benzophenon- oder Acetophenonderivate als acrylierter Fotoinitiator in die Acrylatpolymerkette eingebaut sind. Diese können anschließend mit UV-Strahlung vernetzt (siehe auch US 5,073,611 A) werden. Die erzielbare Scherfestigkeit mit solchen Systemen ist jedoch nicht zufriedenstellend, da diese Systeme bei relativ niedrigem Molekulargewicht (M_{w} (Gewichtsmittel) ca. 250000 g/mol) eine relativ breite Verteilung haben. Ein großer Nachteil dieser Systeme ist zudem, dass sie noch messbare Anteile an Restlösemittel enthalten und somit nicht lösemittelfrei sind.

Eine Weiterentwicklung der Acrylathaftklebemassen bei der Verarbeitung im Hotmeltverfahren und der anschließenden UV-Vernetzung stellt die Herstellung engverteilter Acrylathaftklebemassen mit copolymerisierten Fotoinitiatoren - wie in DE 101 49 084 A dargelegt - dar. Durch die Verwendung von copolymerisierten Fotoinitiatoren wird die Vernetzungseffizienz im Vergleich zur Verwendung von Promotoren, die die UV-Vernetzung fördern und erst nach der Polymerisation zugegeben werden, deutlich gesteigert. Bei diesem Verfahren erfolgt die Polymerisation jedoch weiterhin in Lösung und die Polymerschmelze wird erst durch Aufkonzentration bis zu einem Restgehalt an Lösungsmittel von < 2 % hergestellt. Das anfangs beschriebene ökologische und auch ökonomische Problem des hohen Verbrauchs an organischen Lösungsmittel ist somit auch hier nicht gelöst. Hinzu kommt, dass mögliche Lösungsmittelreste in der Klebemasse bei der anschließenden Verwendung zu Geruchsbelästigung führen kann.

Ein lösungsmittelfreies Verfahren zur Herstellung von Polyacrylaten in einem Doppelschneckenextruder wird in EP 0 160 394 A beschrieben. Allerdings weisen die nach diesem Verfahren hergestellten Acrylatschmelzhaftkleber einen zum Teil erheblich hohen Gelanteil von bis zu 55 % auf, wodurch deren Weiterverarbeitung stark beeinträchtigt ist. Da auch hier eine UV-Vernetzung nur durch nachträgliche Zugabe von Promotoren möglich ist, ist auch die Vemetzungseffizienz nur gering.

Es verbleibt demnach als zentrales Problem die Herstellung von lösungsmittelfreien Acrylathaftklebemassen mit einer effizienten UV-Vemetzung.

Aufgabe der Erfindung ist es daher ein Verfahren zur Herstellung einer lösemittelfreien Polyacrylatmasse, welche im Hotmeltverfahren sehr gut verarbeitbar und danach sehr gut vernetzbar ist, sowie den daraus resultieren Acrylatschmelzhaftklebem zur Verfügung zu stellen, welche die Nachteile des genannten Standes der Technik nicht oder nur in vermindertem Umfang aufweist.

Gelöst wird diese Aufgabe durch ein Verfahren, wie es im Hauptanspruch niedergelegt ist. Gegenstand der Unteransprüche sind dabei vorteilhafte Weiterbildungen des Verfahrens sowie der Haftktebemasse derselben.

Demgemäß betrifft die Erfindung ein Verfahren zur Herstellung einer UV-vernetzbaren lösungsmittelfreien Polyacrylathaftklebemasse, welche ein mittleres Molekulargewicht M_{w} (Gewichtsmittel) von 100.000 bis 3.000.000 g/mol sowie einpolymerisierte Fotoinitiatoreinheiten besitzt.
Die Herstellung der Polyacrylathaftklebemassen geschieht Ober einen radikalischen lösungsmittelfreien Polymerisationsprozess.

In einer vorteilhaften Weiterbildung der Polyacrylathaftklebemasse weist diese ein mittleres Molekulargewicht M_{w} (Gewichtsmittel) von 100.000 bis 800.000 g/mol und eine Polydispersität von nicht mehr als 4,0 auf sowie besitzt diese einpolymerisierte Fotoinitiatoreinheiten.
Die Herstellung der Polyacrylathaftklebemassen mit einer Polydispersität von nicht mehr als 4,0 geschieht über einen radikalischen lösungsmittelfreien Polymerisationsprozess in einem Planetwalzenextruder, in welchem aus einer Monomermischung ein Polymer hergestellt wird, wobei die zu polymerisierende Monomermischung copolymerisierbare Fotoinitiatoren enthält und wobei der Polymerisationsprozess insbesondere durch die Anwesenheit zumindest einer chemischen Verbindung enthaltend die Einheit 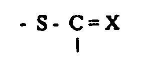 als Polymerisationsregler geregelt wird, wobei X = S, O oder N ist.

Als Polymerisationsregler lassen sich dabei sehr vorteilhaft im erfinderischen Sinne Trithiocarbonate oder Dithioester einsetzen.

Überraschenderweise wurde gefunden, dass sich durch Polymerisation in einem Planetwalzenextruder bei Einsatz von copolymerisierbaren Fotoinitiatoren diese so einpolymerisiert werden, dass sich lösungsmittelfreie Polyacrylatschmelzhaftkleber herstellen lassen, die sich durch UV-Strahlung sehr effizient vernetzen lassen.

Die vorliegende Erfindung betrifft daher unter anderem ein Verfahren zur Herstellung lösungsmittelfreier UV-vernetzbarer Polyacrylathaftklebemassen. Das Verfahren zeichnet sich dadurch aus, dass die Herstellung des Polymers durch lösungsmittelfreie Polymerisation erfolgt, wobei die Monomermischung copolymerisierbare Fotoinitiatoren besitzt.

Durch den Einsatz von copolymerisierbaren Fotoinitiatoren während der lösungsmittelfreien Polymerisation entsteht ein Polymer, dass sich durch UV-Strahlung sehr effizient vernetzen lässt. Die nach einem solchen Verfahren hergestellten Polymere lassen sich sehr gut beschichten und zeichnen sich neben der hohen UV-Vemetzungseffizienz durch ihre extrem niedrige Geruchsintensität aus. Sie eignen sich daher zur Herstellung von Klebebändern, die auch bei hoher Scherbelastung verwendet werden können. Ein mit der erfindungsgemäßen Klebmasse beschichtetes Klebeband besitzt zudem keine Lösemittelrückstände, wie dieses bei Klebebändern, die nach dem herkömmlichen Verfahren hergestellt werden, der Fall ist. Kommerziell erhältliche UV-vemetzbare Acrylatschmelzhaftkleber enthalten beispielsweise noch einen gewissen Restlösungsmittelanteil. Mit Hilfe des erfindungsgemäßen Verfahrens lassen sich somit Klebebänder herstellen, die kein Lösemittel enthalten.

Es wurde gefunden, dass die lösungsmittelfreie Herstellung eines UV-vernetzbaren Polyacrylathaftschmelzklebers in einem Extruder vorteilhaft möglich ist. Insbesondere hat sich der Planetwalzenextruder als geeignet für ein solches Verfahren erwiesen. Die Polymerisation im Planetwalzenextruder hat den Vorteil, dass die Neigung zur Gelbildung wesentlich geringer ist als beispielsweise in einem Doppelschneckenextruder, insbesondere bei Einsatz von regelnden Substanzen und copolymerisierbaren Fotoinitiatoren ist eine besonders geringe Neigung zur Gelbildung festzustellen. Es ergeben sich dadurch engverteilte Polyacrylatschmelzhaftkleber mit sehr guten Eigenschaften zur Weiterverarbeitung, die sich zudem durch UV-Vernetzung sehr effizient vernetzen lassen.

Aufgrund der üblicherweise kurzen Verweilzeit bei Polymerisationen im Planetwalzenextruder war es nicht vorhersehbar, dass der copolymerisierbare Fotoinitiator bei der lösungsmittelfreien Polymerisation in einem für die Vernetzung erforderlichem Maße einpolymerisiert wird. Überraschenderweise wurden auch bei kombiniertem Einsatz von copolymerisierbaren Fotoinitiatoren und regelnden Substanzen während der Polymerisation im Planetwalzenextruder gut UV-vemetzbare Polyacrylatschmelzhaftkleber hergestellt. Dieses war deswegen nicht vorhersehbar, da dieser kombinierte Einsatz der erwähnten Substanzen in einer herkömmlichen Lösungsmittelpolymerisation im Rührkessel zu einer enormen Reduzierung der Reaktionsgeschwindigkeit führt.
Es wurde gefunden, dass gerade die Kombination vom Einsatz regelnder Substanzen mit copolymerisierbarem Fotoinitiator bei Polymerisationen in einem Planetwalzenextruder zu besonders gut beschichtbaren UV-vemetzenden Klebemassen führt.
Die geringe Polydispersität führt zu Vorteilen bei der Polymerisation im Planetwalzenextruder, wodurch die hervorragenden Mischeigenschaften, durch die sich ein Planetwalzenextruder auszeichnet, verstärkt werden. Durch den Einsatz von regelnden Substanzen entstehen Polymere mit geringer Polydispersität, was sich vorteilhaft auf die lösungsmittelfreie Polymerisation auswirkt. Die Viskosität, die eine entscheidende Rolle gerade bei der lösungsmittelfreien Polymerisation spielt, wird durch die geringe Polydispersität in einen für die lösungsmittelfreie Polymerisation günstigen Bereich geführt. Bei größerer Polydispersität ist die Viskosität ebenfalls erhöht, wodurch die Wärmeabfuhrmöglichkeiten und auch die Mischwirkung im Reaktor verringert werden. Diese Eigenschaften sind für die sichere Durchführung von lösungsmittelfreien Polymerisationen von entscheidender Bedeutung. Ebenso wird durch den positiven Einfluss der Polydispersität auf die Viskosität ein hoher Umsatz ermöglicht sowie die Neigung zur Gelbildung dadurch verringert, was wiederum für die Verwendung der Klebemasse als Schmelzhaftkleber wichtig ist.

Der Planetwalzenextruder ist insbesondere durch seine herausragende Wärmecharakteristik als auch durch die äußerst vielfältigen Möglichkeiten der Temperaturführung für diese lösungsmittelfreie Polymerisation geeignet.

Der verwendete Extruder wird bevorzugt kontinuierlich betrieben. Auch eine teilweise Rückführung des Produktstromes, ein sogenannter Schlaufenbetrieb, kann vorteilhaft sein. Am vorteilhaftesten ist die Herstellung einer lösungsmittelfreien UV-vernetzbaren Polyacrylathaftklebemasse in einem hydraulisch gefüllten Planetwalzenextruder. Die hydraulische Füllung vereinfacht die Einhaltung von sauerstofffreien Bedingungen sowie die bestmöglichste Ausnutzung der Verfahrenslänge. Zudem werden Phasengrenzflächen vermieden, die sich störend auf den Polymerisationsprozess auswirken können.

Die Monomere können sowohl einzeln wie auch als Mischung dem Polymerisationsreaktor zudosiert werden. Durch eine Vorvermischung insbesondere des copolymerisierbaren Fotoinitiators wird eine gleichmäßige Verteilung des Reaktionsgemisches sichergestellt. Prinzipiell ist aber auch eine Vermischung im Reaktor oder durch Zusammenführung verschiedener Eduktströme in einem vorgeschalteten kontinuierlichen Mischer, der dynamisch betrieben wird oder ein statischer Mischer oder ein Mikromischer sein kann, möglich.

Die Zugabe weiterer Stoffe wie beispielsweise Initiatoren, Polymerisationsregler sowie weiterer Monomere zum Eduktstrom längs der Verfahrensstrecke des Reaktors kann sinnvoll sein. Bei Verwendung eines Planetwalzenextruders, der aus mehreren hintereinander geschalteten Walzenzylindern besteht, können solche Zugaben über Bohrungen in den Verbindungsflanschen der Walzenzylinder erfolgen.
Mit einer Nachdosierung von geeigneten Initiatoren oder Initiatorengemischen lassen sich hohe Umsätze erzielen, ohne dass gleichzeitig durch hohe Primärradikalkonzentration niedrige Molekulargewichte oder Vergelungen des Polymers induziert werden.

In einer Fortentwicklung des Verfahrens wird das Polymer nach der Polymerisation im Planetwalzenextruder in einem Entgasungsextruder von noch flüchtigen Bestandteilen wie nicht umgesetzten Monomeren entfernt. Diese können nach der Bestimmung der Zusammensetzung wieder dem Eduktstrom zugeführt werden

In einer weiteren Fortentwicklung des Verfahrens wird das Polymer nach der Polymerisation und eventuell notwendiger Entgasung und der eventuellen Zugabe von einem oder mehrerer der Additive, wobei die Zugabe im Polymerisationsextruder und/oder einem nachgeschalteten Compoundierextruder erfolgen kann, aus der Schmelze vorteilhaft gelfrei auf einen Träger beschichtet ("gelfrei" bedeutet die Erfüllung der Anforderungen für eine Beschichtbarkeit der Massen mit den üblicherweise verwendeten und dem Fachmann für diese Zwecke geläufigen Beschichtungsapparaturen, insbesondere für eine Beschichtbarkeit, welche sich durch ein gleichmäßiges (homogenes) Beschichtungsbild ohne Inhomogenitäten oder Schlieren auszeichnet, wenn durch die üblicherweise verwendeten Beschichtungsdüsen oder durch Walzenauftragwerk beschichtet wird).

Sodann ist es vorteilhaft, das Polymer durch UV-Strahlung zu vernetzen, dies geschieht insbesondere nach der Beschichtung auf den Träger. Dabei wird bevorzugt derart vorgegangen, dass die UV-Vernetzung durch den zugesetzten Polymerisationsregler unterstützt wird.

Zusammenfassend lässt sich folgendes Schema für eine vorteilhafte Vorgehensweise aufstellen:
- Polymerisationsprozess einer Monomermischung enthaltend neben Monomeren auf (Meth-)Acrylsäurebasis copolymerisierbare Fotoinitiatoren,
- wobei die Polymerisation in einem lösungsmittelfreien Prozess erfolgt,
- der durch die Verwendung eines Planetwalzenextruders möglich wird.
- Durch den Einsatz eines Kontrollreagenzes werden Polydispersitäten von 1,2 bis 4 erzielt.
- Dem Polymerisationsprozess kann ein Entgasungsprozess folgen.
- Das Polymer kann direkt weiterverarbeitet werden. Ein Lösungsmittelrecycling ist unnötig.
- Das Polymer wird aus der Schmelze gelfrei beschichtet und
- nach der Beschichtung mit UV-Licht vernetzt wird, wobei der zugesetzte Regler die UV-Vernetzung unterstützt und beschleunigt.

Die UV-vernetzende Polyacrylathaftklebemasse und die engverteilte UV-vemetzende Polyacrylathaftklebemasse bestehen bevorzugt aus den folgenden Monomeren
a) Acrylsäureester und/oder Methacrylsäureester beziehungsweise deren freien Säuren mit der folgenden Formel CH₂ = C(R₁)(COOR₂),
   wobei R₁ = H oder CH₃ und R₂ eine Alkylkette mit 1 bis 30 C-Atomen oder H ist, zu 70 bis 99,9 Gew.-%, insbesondere 75 bis 99,5 Ges.-%.
   UV-Fotoinitiator mit einer radikalisch zu polymerisierenden Doppelbindung zu 0,1 bis 2 Gew.-%, insbesondere 0,4 bis 1 Gew.-%,
c) gegebenenfalls olefinisch ungesättigte Monomere mit funktionellen Gruppen zu 0 bis 30 Gew.-%.

In einer sehr bevorzugten Auslegung werden als Monomere a) Acrylmomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung unnötig einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie zum Beispiel 2-Ethylhexylacrylat. Weitere Verbindungsklassen, die ebenfalls in geringen Mengen unter a) hinzugesetzt werden können, sind Methylmethacrylate, Cyclohexylmethacrylate und Isobornylmethacrylate.

In einer sehr bevorzugten Auslegung werden für die Monomere b) Fotoinitiatoren mit zumindest einer Vinylverbindung eingesetzt. Die Fotoinitiatoren können vom Typ Norrish I oder Norrish II sein.

Die Fotoinitiatoren beinhalten dabei als Baustein bevorzugt einen oder mehrere der folgenden Reste:
Benzophenon-, Acetophenon-, Benzil-, Benzoin-, Hydroxyalkylphenon-, Phenylcyclohexylketon-, Anthrachinon-, Trimethylbenzoyl phosphin oxid-, Methylthiophenylmorpholinketon-, Aminoketone-, Azobenzoine, Thioxanthon-, Hexarylbisimidazol-, Triazin-, oder Fluorenon, wobei jeder dieser Reste zusätzlich mit einem oder mehreren Halogenatomen und/oder einer oder mehreren Alkoxygruppen und/oder einer oder mehreren Aminogruppen und/oder Hydroxygruppen substituiert sein kann. Ein repräsentativer Überblick wird in "Photoinitiation Photopolymerization and Photocuring, Fundamentals and Applications, von J.-P. Fouassier, Hanser Publishers, München, Wien, New York 1995" gegeben. Ergänzend kann betrachtet werden "Chemistry & Technology of UV & EB formulation for Coatings, Inks & Paints, Volume 5, A. Carroy, C. Decker, J.P. Dowling, P. Pappas, B. Monroe, ed. By P.K.T. Oldring, publ. By SITA Technology, London, England 1994". Konkrete Beispiele, ohne sich dadurch unnötig einschränken zu wollen, sind acryliertes Benzophenon, wie zum Beispiel Ebecryl P 36^{™} der Firma UCB, oder Benzoinacrylat.

In einer sehr bevorzugten Auslegung werden als Monomere c) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril. In einer weiteren sehr bevorzugten Auslegung für die Monomere c) werden Monomere mit folgenden funktionellen Gruppen eingesetzt: Hydroxy-, Carboxy-, Epoxy-, Säureamid-, Isocyanato- oder Aminogruppen.

In einer vorteilhaften Variante werden für c) Acrylmonomere entsprechend der folgenden allgemeinen Formel eingesetzt, 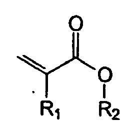 wobei R₁ = H oder CH₃ ist und der Rest -OR₂ die funktionelle Gruppe darstellt oder beinhaltet und zum Beispiel in einer besonders bevorzugten Auslegung eine H-Donor Wirkung besitzt, die die UV-Vernetzung erleichtert.
Besonders bevorzugte Beispiele für die Komponente c) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrylat, β-Acryloyloxypropionsäure, Trichloracrylsäure, Fumarsäure, Crotonsäure, Aconitsäure, Dimethylacrylsäure, wobei diese Aufzählung nicht abschließend zu verstehen ist.
In einer weiteren bevorzugten Auslegung werden für die Komponente c) aromatische Vinylverbindungen eingesetzt, wobei bevorzugt die aromatischen Kerne aus C₄ bis C₁₈ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung ebenfalls nicht abschließend zu verstehen ist.

Zur Polymerisation werden die Monomere dermaßen gewählt, dass die resultierenden Polymere als industriell verwendbare Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft unterhalb 25 °C.

Zur Herstellung der engverteilten Polymere wird zur Polymerisation bevorzugt ein Kontrollreagenz der allgemeinen Formel eingesetzt: 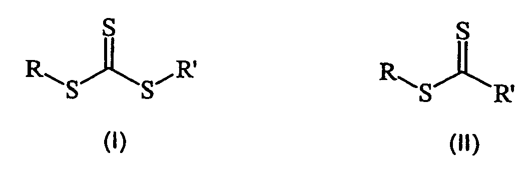 worin R und R' unabhängig voneinander gewählt oder gleich sind, und der folgenden Aufzählung entstammen:
- verzweigte und unverzweigte C₁- bis C₁₈-Alkylreste; C₃- bis C₁₈-Alkenylreste; C₃- bis C₁₈-Alkinylreste
- H oder C₁- bis C₁₈ Alkxoy
- durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
- C₂-C₁₈-Hetero-Alkylreste mit mindestens einem O-Atom und/oder einer NR'-Gruppe in der Kohlenstoffkette
- mit zumindest einer Estergruppe, Amingruppe, Carbonatgruppe, Cyano-, Isocyano- und/oder Epoxidgruppe und/oder mit Schwefel substituierte C₁-C₁₈-Alkylreste, C₃-C₁₈-Alkenylreste, C₃-C₁₈-Alkinylreste;
- C₃-C₁₂-Cycloalkylreste
- C₆-C₁₈- Aryl- oder Benzylreste
- Wasserstoff

Kontrollreagenzien des Typs (I) bestehen in einer mehr bevorzugten Auslegung aus folgenden Verbindungen.

Halogene sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.
Als Beispiele für Alkylreste, welche 1 bis 18 Kohlenstoffatome enthalten, seien Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl genannt.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter C₂-C₁₈-Hetero-Alkylrest mit mindestens einem O-Atom in der Kohlenstoffkette ist beispielsweise -CH₂-CH₂-O-CH₂-CH₃.
Als C₃-C₁₂-Cycloalkylreste dienen beispielsweise Cyclopropyl, Cyclopentyl, Cyclohexyl oder Trimethylcyclohexyl.
Als C₆-C₁₈-Arylreste dienen beispielsweise Phenyl, Naphthyl, Benzyl, 4-tert.-Butylbenzyl- oder weitere substituierte Phenyl, wie zum Beispiel Ethyl, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit

Weiterhin sind auch Verbindungen der folgenden Typen als Kontrollreagenzien geeignet 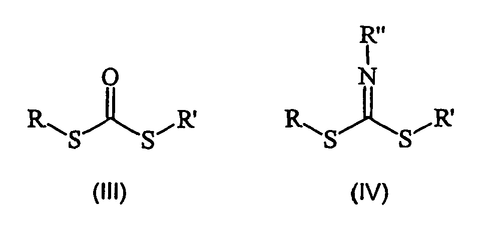 wobei R" die vorstehend genannten Reste R oder R', unabhängig von deren Wahl, umfassen kann.

In einer besonders bevorzugten Ausführungsform der Erfindung werden Verbindungen (Ia) und (IIa) als Kontrollreagenzien eingesetzt. 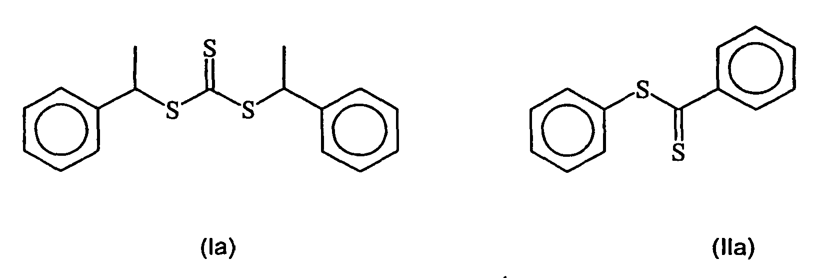 In Verbindung mit den obengenannten kontrolliert radikalisch verlaufenden Polymerisationen werden bevorzugt Initiatorsysteme, die zusätzlich weitere radikalische Initiatoren zur Polymerisation enthalten, insbesondere thermisch zerfallende radikalbildende Azo- oder Peroxo-Initiatoren, eingesetzt. Prinzipiell eignen sich hierfür jedoch alle für Acrylate bekannten üblichen Initiatoren. Die Produktion von C-zentrierten Radikalen ist im Houben Weyl, Methoden der Organischen Chemie, Vol. E 19a, Seiten 60 bis 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Cyclohexylsulfonylacetylperoxid, Düsopropyl-percarbonat, t-Butylperoktoat, Benzpinacol. In einer sehr bevorzugten Auslegung wird als radikalischer Initiator 2,2'-Azobis-isobutyronitril (Vazo 64^{™} der Firma DuPont) verwendet.

Die mittleren Molekulargewichte M_{w} (Gewichtsmittel) der bei der kontrollierten radikalischen Polymerisation entstehenden Polymere werden derart gewählt, dass sie in einem Bereich von 100.000 und 800.000 g/mol liegen; speziell für die weitere Verwendung als Schmelzhaftkleber werden Haftklebemassen mit mittleren Molekulargewichten (Gewichtsmittel) M_{w} von 100.000 bis 350.000 g/mol hergestellt. Die Bestimmung des mittleren Molekulargewichtes M_{w} erfolgt jeweils über Größenausschlusschromatographie (Gelpermeationschromatographie, GPC) oder Matrix-unterstützte Laser-Desorption/lonisations-Massenspektrometrie (MALDI-MS).

Die Polymerisation erfolgt in Substanz ohne Zusatz von Lösungsmitteln.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

In einer weiteren vorteilhaften Weiterentwicklung werden zu den Polyacrylaten ein oder mehrere Weichmacher, wie zum Beispiel niedermolekulare Polyacrylate, Phthalate, Phosphate, Citrate, wasserlösliche Weichmacher (Walöweichmacher) hinzudosiert.

Die Polyacrylate können des weiteren mit einem oder mehreren Additiven wie Alterungsschutzmitteln, Lichtschutzmitteln, Ozonschutzmitteln, Fettsäuren, Keimbildnern, Blähmitteln, Compoundierungsmitteln und/oder Beschleunigern abgemischt sein. Bei den Alterungsschutzmitteln sei besonders auf primäre und sekundäre Alterungsschutzmittel hingewiesen, die unter den Handelsnamen Irganox^{™} der Firma Ciba Geigy und Hostanox^{™} der Firma Clariant kommerziell erhältlich sind.

Gegenstand der Erfindung ist ebenso die besonders bevorzugte Verwendung der Polyacrylathaftklebemasse für ein Klebeband, wobei die Polyacrylathaftklebemasse ein- oder beidseitig auf einem Träger aufgetragenen sein kann.

Als Trägermaterialien für die Haftklebemasse, beispielsweise für Klebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist ebenfalls nicht abschließend zu verstehen.

Insbesondere für die Verwendung als Haftklebemasse ist es für das erfinderische Verfahren vorteilhaft, wenn das Polyacrylat (das entstandene Polymer) bevorzugt inline auf einen Träger oder auf ein Trägermaterial als Schicht aufgebracht wird.

Es ist für die Verwendung als Haftklebemasse besonders günstig, die Polyacrylate nach der Beschichtung auf den Träger oder auf das Trägermaterial zu vernetzen. Zur Herstellung der Haftklebebänder werden die oben beschriebenen Polymere hierzu optional mit Vernetzern abgemischt. Bevorzugte unter Strahlung vernetzende Substanzen gemäß dem erfinderischen Verfahren sind zum Beispiel bi- oder multifunktionelle Acrylate oder bi- oder multifunktionelle Urethanacrylate, bi- oder multifunktionelle Isocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.

Zur Steigerung der Vernetzungseffizienz können die Polyacrylate gegebenenfalls mit weiteren, nicht copolymerisierten Fotoinitiatoren abgemischt werden. Hierfür eignen sich bevorzugt Norrish-Typ I - und -Typ II -Spalter, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, wobei diese Aufzählung keinen Anspruch auf Vollständigkeit besitzt. Ein repräsentativer Überblick wird nochmals in "Photoinitiation Photopolymerization and Photocuring, Fundamentals and Applications, von J.-P. Fouassier, Hanser Publishers, München, Wien, New York 1995" und "Chemistry & Technology of UV EB formulation for Coatings, Inks & Paints, Volume 5, A. Carroy, C. Decker, J.P. Dowling, P. Pappas, B. Monroe, ed. By P.K.T. Oldring, publ. By SITA Technology, London, England 1994" gegeben.

Die UV-Vernetzung findet sehr bevorzugt mittels kurzzeitiger ultravioletter Bestrahlung in einem Wellenlängenbereich von 200 bis 450 nm statt, insbesondere unter Verwendung von Quecksilber-Hochdruck- oder -Mitteldruck-Lampen bei einer Leistung von 80 bis 240 W/cm. Zur UV-Vernetzung kann aber auch monochromatische Strahlung in Form von Lasern verwendet werden. Um Überhitzungen zu vermeiden, kann es angebracht sein, den UV-Strahlengang teilweise abzuschatten. Weiterhin können spezielle Reflektoren-Systeme eingesetzt werden, die als Kaltlichtstrahler fungieren um somit Überhitzungen zu vermeiden.

Es kann angebracht sein, die erfindungsgemäß beschriebenen Polyacrylate mit Elektronenstrahlen zusätzlich zu vernetzen. Typische Bestrahlungsvorrichtungen, die zum Einsatz kommen können, sind Linearkathodensysteme, Scannersysteme beziehungsweise Segmentkathodensysteme, sofern es sich um Elektronenstrahlbeschleuniger handelt.

Eine ausführliche Beschreibung des Stands der Technik und der wichtigsten Verfahrensparameter findet man bei Skelhorne "Electron Beam Processing" in Vol. 1 "Chemistry & Technology of UV & EB Formulations for Coatings, Inks & Paints" publ. Sita Technology, London 1991. Die typischen Beschleunigungsspannungen liegen im Bereich zwischen 50 kV und 500 kV, vorzugsweise 80 kV bis 300 kV. Die angewandten Strahlungsdosen bewegen sich zwischen 5 bis 150 kGy, insbesondere 20 bis 100 kGy.

### Beispiele

### Praktische Durchführungen

### Durchführung der Polymerisation (Methode A):

Für die Durchführung der Polymerisation wurde ein Planetwalzenextruder bestehend aus drei hintereinander geschalteten Walzenzylindern als Reaktor verwendet. Die verwendeten Walzenzylinder haben einen Walzendurchmesser von D = 70 mm und wurden mit 7 Planetenspindeln bestückt. Sowohl Zentralspindel als auch Walzenzylinder sind mit voneinander getrennten Temperierkreisen ausgestattet. Als. Temperiermedium wurde Druckwasser verwendet.
Für die Polymerisation wird der Reaktor kontinuierlich betrieben. Vor Beginn der Dosierung wird der Reaktor 1 Stunde mit Stickstoff gespült. Aus Monomeren und Initiator wird eine Mischung hergestellt. Durch diese Vorlage wird zur Inertisierung Stickstoff durchgeleitet. Mittels einer Pumpe wird die Reaktionsmischung durch einen statischen Mischer, der mit weiteren Zulaufvorrichtungen ausgestattet ist, und dann durch einen Wärmetauscher in den Reaktor gefördert. Die Zugabe der Reaktionsmischung in den Reaktor erfolgt kontinuierlich über eine Bohrung am Anfang des ersten Walzenzylinders. Am Reaktorausgang befindet sich ein Ventil, mit dessen Hilfe die hydraulische Füllung des Reaktors sichergestellt wird.
Der Wärmetauscher zur Feedvorwärmung, Zentralspindel und Walzenzylinder werden mit den jeweils gewünschten Temperaturen temperiert. Bei der Zentralspindel wurde eine Temperatur von 80 °C eingestellt, das Medium zur Feedvowärmung auf 90°C. Die Walzenzylinder 1 und 3 wurden mit 100 °C, der Walzenzylinder 2 mit 95°C temperiert.
Die Drehzahl der Zentralspindel betrug 50 Umdrehungen pro Minute. Die hydrodynamische Verweilzeit betrug 15 min. Nach dem Austritt aus dem Reaktor wird eine Probe zur Umsatzbestimmung genommen. Anschließend werden noch vorhandene flüchtige Bestandteile in einem Entgasungsextruder entfernt.

### Herstellung der Lappenmuster (Methode B):

Die Klebmasse wird über einen Hotmelt-Coater mit zwei beheizbaren Walzen auf eine 23 µm dicke mit einem Saran-Primer versehende PET-Folie mit einem Masseauftrag von 50 g/m² beschichtet.

### UV-Bestrahlung (Methode C)

Zur UV-Bestrahlung wurde eine UV-Anlage der Fa. Eltosch verwendet. Die Anlage ist ausgerüstet mit einem Hg-UV-Mitteldruckstrahler mit einer Intensität von 120 W/cm. Die nach Methode B hergestellten Lappenmuster wurden jeweils mit einer Geschwindigkeit von 20 m/min durch die Anlage gefahren, wobei die Muster zur Erhöhung der Bestrahlungsdosis in mehreren Durchgängen bestrahlt wurden. Die UV-Dosis wurde mit dem Power-Puck der Fa. Eltosch gemessen. Die Dosis eines Bestrahlungsdurchganges betrug ca. 140 mJ/cm² im UV-B Bereich und 25 mJ/cm² im UV-C Bereich.

### Herstellung von Bis-2,2'-phenylethyl-thiocarbonat

Die Synthese des Bis-2,2'-phenylethyl-thiocarbonates erfolgt ausgehend von 2-Phenylethylbromid mit Dischwefelkohlenstoff und Natriumhydroxid nach einer Vorschrift von Synth. Communications 18(13), S. 1531-1536, 1988. Ausbeute nach Destillation: 72 %.
Charakterisierung: ¹H-NMR (CDCl₃) δ (ppm): 7,20-7,40 (m, 10 H), 1,53, 1,59 (2 x d, 6 H), 3,71, 381 (2 x m, 2 H).

### Photoinitiatoren

Als copolymerisierbarer Fotoinitiator wurde Benzoinacrylat eingesetzt.

### Testmethoden

Folgende Testmethoden wurden angewendet, um die Eigenschaften der Polymere und der hergestellten Haftklebemassen zu evaluieren.

### Umsatzbestimmung (Test A)

Die Bestimmung des Umsatzes erfolgte gravimetrisch und wird prozentual zu der Gewichtsmenge der eingesetzten Monomere angegeben. Zur Isolierung des Polymers wird das Polymer im Vakuumschrank getrocknet. Das Gewicht des Polymers wird gewogen und geteilt durch die Einwaage der eingesetzten Monomere. Der berechnete Wert entspricht dem prozentualen Umsatz.

### Gelpermeationschromatographie GPC (Test B)

Die Bestimmung des mittleren Molekulargewichtes M_{w} und der Polydisperistät PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### Bestimmung des Gelanteils (Test C)

Die sorgfältig getrockneten lösungsmittelfreien Klebstoffproben werden in ein Vliestütchen aus Polyethylen (Tyvek-Vlies) eingeschweißt. Für die. Bestimmung des Gelwertes nach der UV-Vernetzung, wird eine definierte Fläche des hergestellten Lappenmusters in ein Fließtütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

Folgende Testmethoden wurden angewendet, um die klebtechnischen Eigenschaften der hergestellten Haftklebemassen zu evaluieren.

### Scherfestigkeit (Test D)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm x 13 mm (Länge x Breite). Anschließend wurde mit einem 2 kg-Gewicht das Klebeband viermal auf den Stahlträger gedrückt. Bei Raumtemperatur (RT) wurde ein 1 kg-Gewicht an dem Klebeband befestigt und die Zeit bis zum Abfallen des Gewichtes gemessen.

Die gemessenen Scherstandzeiten (SSZ) sind in Minuten angegeben und entsprechen dem Mittelwert aus drei Messungen.

### 180° Klebkrafttest (Test E)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Messergebnisse sind in N/cm angegeben und sind gemittelt aus drei Messungen. Alle Messungen wurden bei Raumtemperatur durchgeführt.

### Beispiele

### Beispiel 1: (breite M_{w}-Verteilung; hohe Molmasse; UV-Vernetzung ohne UV-Initiator)

Nach Methode A wurde ein Polymer hergestellt. Eingesetzt wurden 5 % Acrylsäure, 95 % n-Butylacrylat und 0,015 % Azoisobutyronitril (AIBN, Vazo 64^{™}, Fa. DuPont).
Das mittlere Molekulargewicht und die Polydispersität wurden mittels Test B bestimmt, der Umsatz durch Test A und der Gelwert nach Test C.
Anschließend wurde nach Methode B ein Lappenmuster hergestellt und dieses nach Methode C UV-bestrahlt.
Das Muster wurde nach der Test C, D und E ausgetestet.

### Beispiel 2: (enge M_{w}-Verteilung, niedrige Molmasse, UV-Photoinitiator)

Nach Methode A wurde ein Polymer hergestellt. Eingesetzt wurden 4,5 % Acrylsäure, 95 % n-Butylacrylat, 0,5 % Benzoinacrylat sowie 0,124 % Bis-2,2'-phenylethyl-thiocarbonat und 0,015 % Azoisobutyronitril (AIBN, Vazo 64^{™}, Fa. DuPont).
Das mittlere Molekulargewicht und die Polydispersität wurden mittels Test B bestimmt, der Umsatz durch Test A und der Gelwert nach Test C.
Anschließend wurde nach Methode B ein Lappenmuster hergestellt.

### Beisiel 3: (enge M_{w}-Verteilung, niedrige Molmasse, UV-Photoinitiator)

Nach Methode A wurde ein Polymer hergestellt. Eingesetzt wurden 0,5 % Acrylsäure, 49,5 % n-Butylacrylat, 49,5 % 2-Ethylhexylacrylat, 0,5 % Benzoinacrylat sowie 0,124 % Bis-2,2'-phenylethyl-thiocarbonat und 0,015 % Azoisobutyronitril (AIBN, Vazo 64^{™}, Fa. DuPont).
Das mittlere Molekulargewicht und die Polydispersität wurden mittels Test B bestimmt, der Umsatz durch Test A und der Gelwert nach Test C.
Anschließend wurde nach Methode B ein Lappenmuster hergestellt und dieses nach Methode C UV-bestrahlt.
Das Muster wurde nach der Test C, D und E ausgetestet.

### Resultate

In der folgenden Tabelle 1 sind zunächst die Ergebnisse der Polymerisationen zusammengestellt:

| Tabelle 1 | | | | |
|---|---|---|---|---|
| Beispiel | M_{w} [g/mol] | Polydispersität PD | Umsatz [%] | Notwendige Walzen-temperatur für die Beschichtung [°C] |
| 1 | 2.380.000 | 6.1 | 72 | Nicht beschichtbar |
| 2 | 593.000 | 3.4 | 67 | 120 |
| 3 | 487.000 | 3.6 | 60 | 110 |

| | | | | |
|---|---|---|---|---|
| M_{w}: mittleres Molekulargewicht aus GPC PD: M_{w}/M_{N} = Polydispersität aus GPC | | | | |

Tabelle 2 zeigt die Ergebnisse der Vernetzung und klebtechnischen Bewertung der Lappenmuster.

| Tabelle 2 | | | | |
|---|---|---|---|---|
| Beispiel | Gelwert [%] | Gelwert [%] | KK - Stahl | SSZ bei RT |
| | nach Polymerisation | nach UV-Vernetzung | [N/cm] | [min] |
| 1 | 0 | 0 | | |
| 2 | 0 | 48 | 5,2 | > 10000 |
| 3 | 0 | 46 | 4,5 | 2780 |

| | | | | |
|---|---|---|---|---|
| SSZ: Scherstandzeiten RT: Raumtemperatur KK: Klebkraft | | | | |

Beispiel 1 dient als Referenzbeispiel. Für das erfindungsgemäße Verfahren sind die Beispiele 2 bis 3 angefügt. In den Beispielen 2 bis 3 wurden Acrylathaftklebemassen mit copolymerisiertem Fotoinitiator und niedriger Molmasse hergestellt. Durch den Einsatz eines Reglers wurden dabei Polymere mit einer engverteilten Molekulargewichtsverteilung erhalten.

Die Vorteile des erfindungsgemäßen Verfahrens werden bei Betrachtung der Beschichtbarkeit der Acrylatmasse deutlich. Beispiel 1 ist sehr hochmolekular und lässt sich nicht beschichten. Durch den Einsatz des Reglers bei Beispiel 2 und 3 wird das Molekulargewicht so weit erniedrigt, dass eine für die Anwendung im Klebeband notwendige Beschichtung möglich ist. So ist Beispiel 2 mit einem Mw von 593.000 g/mol bei 120 °C und Beispiel 3 mit einem niedrigeren Mw von 487.000 g/mol schon bei 110 °C beschichtbar. Durch das erfindungsgemäße Verfahren wird eine Verarbeitung der hergestellten Klebemasse bei niedriger Beschichtungstemperatur möglich. Somit kann eine komplett lösemittelfreie Herstellung der Klebebänder erfolgen.
Für die Effizienz der UV-Vernetzung ist der Gelwert ein entscheidendes Kriterium. Aus Tabelle 2 ist ersichtlich, dass die Verwendung eines copolymerisierbaren Fotoinitiators zu einer Vernetzung führt. So kann die Masse aus Beispiel 1, bei dem kein copolymerisierbarer Fotoinitiator eingesetzt wurde, nicht durch UV-Strahlung vernetzt werden. Wird jedoch wie in Beispiel 2 und 3 ein Fotoinitiator einpolymerisiert, erfolgt eine effiziente Vernetzung durch UV-Strahlung. Dieses führt zu einer guten Scherfestigkeit der hergestellten Lappenmuster bei gleichzeitig hoher Klebkraft auf Stahl.
Die Beispiele belegen somit, dass mit dem erfinderischen Verfahren lösungsmittelfreie UV-vernetzbare Acrylathaftklebemassen hergestellt werden können. Mit dem erfindungsgemäßen Verfahren können durch lösemittelfreie Herstellung Klebebänder produziert werden, die sich mit einer guten Kohäsion auszeichnen, da sie UV-vernetzbar sind. Das Verfahren ermöglicht hohe Beschichtungsgeschwindigkeit (>> 100 m/min) und gleichzeitig gute Vernetzbarkeit auch bei schneller Bahngeschwindigkeit. Die Vernetzung kann durch eine modulare UV-Strecke, 6 Hg-Mitteldruckstrahler 200W/cm, bei 200 m/min erfolgen. In der Anwendung ist das Verfahren daher insbesondere für die Herstellung technischer Klebebänder geeignet.

## Patentansprüche

1. Verfahren zur Herstellung einer UV-vernetzbaren Polyacrylathaftklebemasse, mit einpolymerisierten Fotoinitiatoreinheiten und einem mittleren Molekulargewicht M_{w} (Gewichtsmittel) von 100.000 bis 3.000.000 g/mol, wobei die Herstellung der Polyacrylathaftklebemassen über einen radikalischen lösungsmittelfreien Polymerisationsprozess geschieht, **dadurch gekennzeichnet, dass** die lösungsmittelfreie Polymerisation in einem Planetwalzenextruder erfolgt.

2. Verfahren nach Anspruch 1, **dadurch gekennzeichnet, dass** die UV.vernetzbare Polyacrylathaftklebemasse ein mittleres Molekulargewicht M_{w} (Gewichtsmittel) von 100.000 bis 800.000 g/mol und eine Polydispersität von nicht mehr als 4,0 aufweist.

3. Verfahren nach Anspruch 1 oder 2, **dadurch gekennzeichnet, dass** der Polymerisationsprozess durch die Anwesenheit zumindest einer chemischen Verbindung enthaltend die Einheit 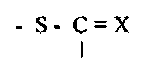 als Polymerisationsregler geregelt wird, wobei X = S, O oder N.

4. Verfahren nach zumindest einem der Ansprüche 1 bis 3, **dadurch gekennzeichnet, dass** Trithiocarbonate oder Dithioester als Polymerisationsregler eingesetzt werden.

5. Verfahren nach zumindest einem der vorangehenden Ansprüche, **dadurch gekennzeichnet, dass** von einer Monomermischung ausgegangen wird, die zumindest die folgenden Komponenten beinhaltet:
68 bis 99,9 Gew.-% Acrylsäureester und/oder Methacrylsäureester und/oder deren freie Säuren mit der folgenden Formel
CH₂ = C(R₁)(COOR₂),
wobei R₁ = H oder CH₃ und R₂ eine Alkylkette mit 1 bis 30 C-Atomen oder H ist, 0,05 bis 2 Gew.-% copolymerisierbare UV-Photoinitiatoren mit einer radikalisch zu polymerisierenden Doppelbindung.

6. Verfahren nach Anspruch 5, **dadurch gekennzeichnet, dass** die Monomermischung weiterhin bis zu 30 Gew.-% olefinisch ungesättigte Monomere mit funktionellen Gruppen beinhaltet.

7. Verfahren nach zumindest einem der vorangehenden Ansprüche, **dadurch gekennzeichnet, dass**
der Polyacrylathaftklebemasse Additive, wie Alterungsschutzmittel, Lichtschutzmittel, Ozonschutzmittel, Fettsäuren, Weichmacher, Keimbildner, Blähmittel, Beschleuniger und/oder Füllmittel zugesetzt werden.

8. Verfahren nach zumindest einem der vorangegangenen Ansprüche **dadurch gekennzeichnet, dass**
die lösungsmittelfreie Polymerisation in einem hydraulisch gefüllten Planetwalzenextruder erfolgt.

9. Verfahren nach zumindest einem der vorangehenden Ansprüche, **dadurch gekennzeichnet, dass**
die Polymerisation kontinuierlich erfolgt.

10. Verfahren nach zumindest einem der vorangehenden Ansprüche, **dadurch gekennzeichnet, dass**
stromab der Verfahrenslänge des Planetwalzenextruders Initiatoren, Monomere sowie Polymerisationsregler zugegeben werden können.

11. Verfahren nach zumindest einem der vorangehenden Ansprüche, **dadurch gekennzeichnet, dass** nach dem Polymerisationsprozess eine Entgasung erfolgt.

12. Verfahren nach zumindest einem der vorangehenden Ansprüche, **dadurch gekennzeichnet, dass** das Polymer nach der Polymerisation und gegebenenfalls anschließender Entgasung aus der Schmelze gelfrei auf einen Träger beschichtet wird.

13. Verfahren nach zumindest einem der vorangehenden Ansprüche, **dadurch gekennzeichnet, dass** das Polymer durch UV-Strahlung vernetzt wird.

14. Verfahren nach Anspruch 13, **dadurch gekennzeichnet, dass**
das Polymer nach der Beschichtung auf einen Träger vernetzt wird, wobei die UV-Vernetzung durch den zugesetzten Polymerisationsregler unterstützt wird.

15. Verfahren nach zumindest einem der vorangehenden Ansprüche, **dadurch gekennzeichnet, dass** vor und/oder während der Polymerisation thermisch zerfallende radikalbildende Initiatoren zugegeben werden.

16. Verwendung einer nach zumindest einem der Ansprüche 1 bis 15 hergestellten Polyacrylathaftklebemasse für ein ein- oder doppelseitiges Haftklebeband.

## Claims

1. Method for producing a UV-crosslinkable polyacrylate pressure-sensitive adhesive, having copolymerized photoinitiator units and an average molecular weight M_{w} (weight average) of 100 000 to 3 000 000 g/mol, the production of the polyacrylate pressure-sensitive adhesives taking place by way of a free-radical solvent-free polymerization operation, **characterized in that** the solvent-free polymerization takes place in a planetary roller extruder.

2. Method according to Claim 1, **characterized in that** the UV-crosslinkable polyacrylate pressure-sensitive adhesive has an average molecular weight M_{w} (weight average) of 100 000 to 800 000 g/mol and a polydispersity of not more than 4.0.

3. Method according to Claim 1 or 2, **characterized in that** the polymerization operation is regulated by the presence of at least one chemical compound containing the unit 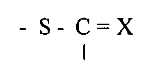 as polymerization regulator, X being S, O or N.

4. Method according to at least one of Claims 1 to 3, **characterized in that** trithiocarbonates or dithioesters are used as polymerization regulators.

5. Method according to at least one of the preceding claims, **characterized in that** the starting point is a monomer mixture including at least the following components:
68% to 99.9% by weight of acrylic esters and/or methacrylic esters and/or the free acids thereof, with the following formula
CH₂ = C(R₁)(COOR₂),
where R₁ = H or CH₃ and R₂ is an alkyl chain having 1 to 30 carbon atoms or H,
0.05% to 2% by weight of copolymerizable UV photoinitiators having a free-radically polymerizable double bond.

6. Method according to Claim 5, **characterized in that** the monomer mixture further includes up to 30% by weight of olefinically unsaturated monomers having functional groups.

7. Method according to at least one of the preceding claims, **characterized in that** additives, such as aging inhibitors, light stabilizers, ozone protectants, fatty acids, plasticizers, nucleators, expandants, accelerants and/or fillers, are added to the polyacrylate pressure-sensitive adhesive.

8. Method according to at least one of the preceding claims, **characterized in that** the solvent-free polymerization takes place in a hydraulically filled planetary roller extruder.

9. Method according to at least one of the preceding claims, **characterized in that** the polymerization takes place continuously.

10. Method according to at least one of the preceding claims, **characterized in that** downstream of the extruder section of the planetary roller extruder it is possible to add initiators, monomers and polymerization regulators.

11. Method according to at least one of the preceding claims, **characterized in that** the polymerization operation is followed by devolatilization.

12. Method according to at least one of the preceding claims, **characterized in that** the polymer, following polymerization and, where appropriate, subsequent devolatilization, is coated from the melt, in particular gel-free, onto a carrier.

13. Method according to at least one of the preceding claims, **characterized in that** the polymer is crosslinked by UV radiation.

14. Method according to Claim 13, **characterized in that** the polymer is crosslinked after coating onto a carrier, the UV crosslinking being assisted by the added polymerization regulator.

15. Method according to at least one of the preceding claims, **characterized in that**, before and/or during the polymerization, thermally decomposing, free-radical-forming initiators are added.

16. Use of a polyacrylate pressure-sensitive adhesive produced according to at least one of Claims 1 to 15 for a single-sided or double-sided pressure-sensitive adhesive tape.

## Revendications

1. Procédé de fabrication d'une masse auto-adhésive à base de polyacrylates, réticulables aux UV, comportant des motifs photoamorceurs polymérisés et ayant une masse moléculaire moyenne M_{w} (moyenne en masse) de 100 000 à 3 000 000 g/mol, la fabrication des masses auto-adhésives à base de polyacrylates étant réalisée par un procédé de polymérisation radicalaire sans solvant, **caractérisé en ce que** la polymérisation sans solvant est mise en oeuvre dans une extrudeuse à vis planétaires.

2. Procédé selon la revendication 1, **caractérisé en ce que** la masse auto-adhésive à base de polyacrylates, réticulables aux UV, présente une masse moléculaire moyenne M_{w} (moyenne en masse) de 100 000 à 800 000 g/mol et une polydispersité non supérieure à 4,0.

3. Procédé selon la revendication 1 ou 2, **caractérisé en ce que** l'opération de polymérisation est régulée grâce à la présence d'au moins un composé chimique contenant le motif 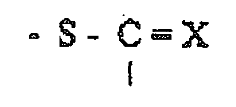 en tant que régulateur de polymérisation, X étant S, O ou N.

4. Procédé selon au moins l'une des revendications 1 à 3, **caractérisé en ce qu'**on utilise en tant que régulateur de polymérisation des trithiocarbonates ou des dithioesters.

5. Procédé selon au moins l'une des revendications précédentes, **caractérisé en ce qu'**on part d'un mélange de monomères qui contient au moins les composants suivantes : 68 à 99,9 % en poids d'esters de l'acide acrylique et/ou d'esters de l'acide méthacrylique et/ou de leurs acides libres, ayant la formule suivante :
CH₂=C(R₁)(COOR₂), où R₁ est H ou CH₃ et R₂ est une chaîne alkyle ayant 1 à 30 atomes de carbone, ou H,
0,05 à 2 % en poids de photoamorceurs UV copolymérisables comportant une double liaison polymérisable par polymérisation radicalaire.

6. Procédé selon la revendication 5, **caractérisé en ce que** le mélange de monomères contient en outre jusqu'à 30 % en poids de monomères à insaturation oléfinique comportant des groupes fonctionnels.

7. Procédé selon au moins l'une des revendications précédentes, **caractérisé en ce que** la masse auto-adhésive à base de polyacrylates est additionnée d'additifs tels que des agents de protection contre le vieillissement, des agents photoprotecteurs, des agents de protection contre l'ozone, des acides gras, des plastifiants, des agents de germination, des agents gonflants, des accélérateurs et/ou des agents de remplissage.

8. Procédé selon au moins l'une des revendications précédentes, **caractérisé en ce que** la polymérisation sans solvant est mise en oeuvre dans une extrudeuse à vis planétaires à remplissage hydraulique.

9. Procédé selon au moins l'une des revendications précédentes, **caractérisé en ce que** la polymérisation est mise en oeuvre en continu.

10. Procédé selon au moins l'une des revendications précédentes, **caractérisé en ce qu'**on peut ajouter des amorceurs, des monomères, ainsi que des régulateurs de polymérisation, en aval de la longueur, utilisée pour le procédé, de l'extrudeuse à vis planétaires.

11. Procédé selon au moins l'une des revendications précédentes, **caractérisé en ce qu'**un dégazage a lieu après l'opération de polymérisation.

12. Procédé selon au moins l'une des revendications précédentes, **caractérisé en ce que** le polymère est appliqué sans gel sur un support, à l'état fondu, après la polymérisation, et après un dégazage effectué éventuellement ensuite.

13. Procédé selon au moins l'une des revendications précédentes, **caractérisé en ce que** le polymère est réticulé par un rayonnement UV.

14. Procédé selon la revendication 13, **caractérisé en ce que** le polymère est réticulé après application sur un support, la réticulation aux UV étant soutenue par le régulateur de polymérisation ajouté.

15. Procédé selon au moins l'une des revendications précédentes, **caractérisé en ce que**, avant et/ou pendant la polymérisation, on ajoute des amorceurs radicalaires pouvant subir une décomposition thermique.

16. Utilisation d'une masse auto-adhésive à base de polyacrylates fabriquée conformément à au moins l'une des revendications 1 à 15, pour un ruban adhésif de contact simple face, ou double face.
